(19) Europäisches Patentamt
European Patent Office
Office européen des brevets

(11) **EP 3 990 210 B1**

(12) **FASCICULE DE BREVET EUROPEEN**

(45) Date de publication et mention
de la délivrance du brevet:
**19.02.2025  Bulletin 2025/08**

(21) Numéro de dépôt: **20747013.9**

(22) Date de dépôt: **25.06.2020**

(51) Classification Internationale des Brevets (IPC):
**B23K 26/00** (2014.01)        **B23K 26/0622** (2014.01)
**B23K 26/352** (2014.01)        **C23C 24/04** (2006.01)
**B23K 101/00** (2006.01)        **B23K 101/18** (2006.01)
**B23K 103/20** (2006.01)

(52) Classification Coopérative des Brevets (CPC):
**B23K 26/0006; B23K 26/0622; B23K 26/3584;
C23C 24/04;** B23K 2101/006; B23K 2101/18;
B23K 2103/20; Y02P 10/25

(86) Numéro de dépôt international:
**PCT/FR2020/000195**

(87) Numéro de publication internationale:
**WO 2020/260778 (30.12.2020 Gazette 2020/53)**

(54) **PROCEDE DE FIXATION DE PIECES PAR PROJECTION D'UNE POUDRE D'UN MATERIAU DUCTILE; ASSEMBLAGE CORRESPONDANT**

VERFAHREN ZUM BEFESTIGEN VON TEILEN DURCH SPRÜHEN EINES PULVERS AUS DUKTILEM MATERIAL UND ENTSPRECHENDE ANORDNUNG

METHOD FOR ATTACHING PARTS BY SPRAYING A POWDER OF A DUCTILE MATERIAL; CORRESPONDING ASSEMBLY

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats de validation désignés:
**MA TN**

(30) Priorité: **25.06.2019  FR 1906888
09.04.2020  FR 2003560**

(43) Date de publication de la demande:
**04.05.2022  Bulletin 2022/18**

(73) Titulaire: **Lisi Automotive
90600 Granvillars (FR)**

(72) Inventeur: **MERCS, David
90000 Belfort (FR)**

(74) Mandataire: **Berger, Helmut
Weinstein Services & Conseils
2-10 Avenue Marc Sangnier
92390 Villeneuve-la-Garenne (FR)**

(56) Documents cités:
DE-A1- 102007 023 418      US-A1- 2007 194 085
US-A1- 2007 241 164        US-A1- 2015 240 364

**Description**

La présente invention concerne un procédé de fixation d'une première pièce et d'une deuxième pièce d'assemblage mécanique entre elles, un assemblage et un véhicule terrestre ou aérien comprenant un tel assemblage, voir les revendications 1, 12 et 13.

Dans un contexte où l'allégement des véhicules constitue un enjeu majeur pour la réduction des émissions polluantes, l'assemblage de matériaux de natures différentes devient de plus en plus important et occupe une proportion croissante des assemblages dans les véhicules terrestre ou aérien. On distingue par exemple des assemblages entre acier et alliage d'aluminium, ou entre acier et matériaux polymères ou composites, avec l'utilisation de fibres de carbone, pour lesquels les techniques d'assemblage classiques ne peuvent pas être utilisées.

Des solutions existent, comme le collage, le clinchage, le rivetage, ou l'assemblage par vis auto foreuse, mais sont limitées par le type de matériaux à assembler (impossible de clincher un composite avec fibres de carbone par exemple), ou manquent de robustesse mécanique, ou entrainent la présence d'extrémités pointues et donc potentiellement dangereuses dans certaines zones du véhicule.

*a. Pion à souder*

Récemment, et pour répondre à ce nouveau besoin d'assemblage multi matériaux, plusieurs fabricants ont proposé des pions à souder permettant de réaliser des assemblages entre des matériaux différents ne pouvant pas être soudés directement entre eux par résistance.

L'avantage évident des pions à souder est l'utilisation de moyens de soudage par résistance largement répandus dans les chaines de montage des différents constructeurs automobile ou aéronautique ce qui permet un transfert facile de ce type de technologie. Toutefois, les pions à souder présentent des inconvénients non négligeables qui limitent leur démocratisation, et principalement (liste non exhaustive) :

- La limitation de l'assemblage à présenter au moins un perçage débouchant pour le passage du pion à souder,
- la limitation de l'assemblage à avoir au moins une partie majoritairement constituée à base de fer (acier) pour effectuer le soudage par résistance,
- la limitation de la matière du pion qui doit être majoritairement constituée à base de fer (acier) pour effectuer le soudage par résistance,
- la nécessité d'avoir accès aux deux côtés de l'assemblage pour permettre le soudage par résistance,
- l'obligation d'adapter la géométrie du pion à souder en fonction de la géométrie de l'assemblage et de la différence d'épaisseur entre les deux pièces à assembler ou de la tolérance d'épaisseur des deux pièces à assembler, et donc de multiplier les références de pions pour satisfaire à toutes les situations,
- la limitation à des assemblages plan sur plan,
- la génération d'une surépaisseur au niveau du pion pour assurer la liaison mécanique,
- la dégradation thermique de la partie en polymère ou en matériau composite lors du soudage par résistance du pion avec l'autre pièce majoritairement à base de fer (acier),

De plus, et compte tenu d'un nombre de points d'assemblage multi matériaux pouvant varier de 500 à plus de 1500 en fonction du type de véhicule, le poids associé à cette technique de pion à souder devient non négligeable et en contradiction avec la volonté initiale d'allégement des véhicules.

En effet, les pions à souder sont majoritairement constitués à base de fer, avec une densité voisine de 7,8g/cm$^3$. Pour un pion à souder standard de 4,5g, la prise de masse peut varier de 2,25 à plus de 6,75kg ! En fonction du nombre de points d'assemblage la solution des pions à souder ne devient donc intéressante qu'à partir d'une réduction de masse non négligeable assurée par la nature composite de l'assemblage (étude à faire au cas par cas).

Un autre aspect important est la résistance mécanique de l'assemblage multi matériaux à l'aide de pions à souder. Celle-ci dépend essentiellement de la qualité du soudage entre la partie à souder du pion et la pièce majoritairement constituée de fer (zone affectée thermiquement).

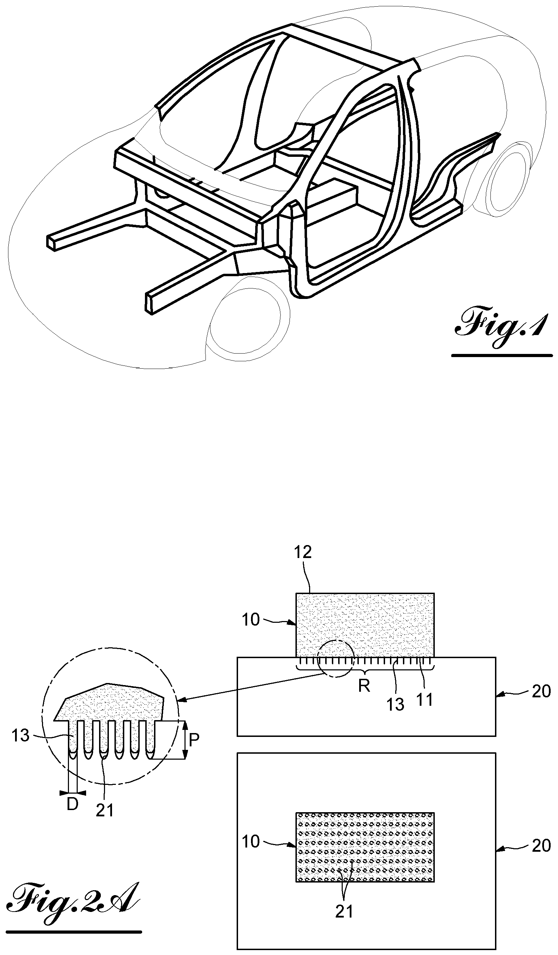

Or, pour alléger leurs véhicules, les constructeurs automobiles mettent généralement en oeuvre des aciers à haute ou très haute résistance mécanique THLE (Très Haute Limite Elastique) (supérieures à 600, 800 voire à 1500MPa) de manière à pouvoir réduire l'épaisseur des produits plats en acier, généralement utilisés au niveau de la caisse, afin de réduire leur masse, tout en conservant le niveau de résistance mécanique nécessaire pour des pièces de structure, comme les traverses, ou les renforts de plancher ou de portière, mises en évidence sur la figure 1. En complément, les alliages d'aluminium sont de plus en plus utilisés dans les véhicules avec des problématiques associées à leur assemblage avec l'acier. Enfin, certains véhicules utilisent également des matériaux composites à fibres de carbone ou des thermoplastiques renforcés dont l'assemblage mécanique robuste avec l'acier ou les alliages d'aluminium est un vrai challenge.

De tels cas nécessitent par exemple un soudage d'un pion en acier faiblement allié (faible coût matière) sur une tôle en acier à très haute résistance mécanique affaiblissant généralement la résistance de la soudure. De plus, la soudure n'étant pas optimisée ou présentant une grande variabilité en fonction du type d'acier utilisé, la résistance au cisaillement et le comportement en fatigue lors d'une sollicitation en flexion alternée ne sont pas optimisés.

*b. Projection thermique de type Cold Spray*

Depuis les années 1980 un procédé de projection « à froid » (Cold Spray) permet l'élaboration de revêtements à l'aide de particules de poudre métalliques non fondues projetées à très haute vitesse (plusieurs centaines de mètres par seconde) contre la pièce à revêtir. Ce procédé, particulièrement adapté aux dépôts de matériaux métalliques ductiles, permet la formation et la cohésion d'un revêtement grâce à la déformation plastique des particules et du substrat lors de l'impact avec le substrat, dans les premiers instants de la croissance du revêtement, puis lors de l'impact avec le revêtement en cours de formation.

Compte tenu de la projection de particules ductiles et non fondues, le Cold Spray permet de déposer des revêtements métalliques à l'air ambiant avec une formation d'oxydes très limitée, voire inexistante. Le Cold Spray, permet également de beaucoup moins solliciter thermiquement le substrat que les techniques de projections thermiques classiques (plasma, HVOF, ...) et de limiter l'accumulation de contraintes thermiques dans le dépôt projeté.

De plus, la vitesse et le rendement de projection par Cold Spray sont généralement très élevés (de l'ordre du kg/h avec des rendements matière supérieur à 90%) ce qui rend la technique particulièrement intéressante pour des applications industrielles.

## Technique antérieure

Au vu de ses avantages, il a été imaginé d'utiliser la projection par Cold Spray pour la réalisation d'un assemblage entre deux matériaux. Le document ci-dessous décrit une telle utilisation.

Le document US 2007/0194085 A1 (décrivant le préambule des revendications 1, 12 et 13) détaille la réalisation d'un assemblage de deux pièces, pouvant être chacune en des matériaux différents, en formant un plot par projection Cold Spray d'un métal, comme l'aluminium, maintenant les pièces solidaires l'une de l'autre.

Ce document décrit l'importance d'une projection à une vitesse produisant assez d'énergie pour enlever des contaminants présents sur le métal projeté et au moins sur l'interface entre les pièces à assembler de sorte à nettoyer les surfaces de liaison. Les contaminants retirés sont, par exemple, des oxydes, des lubrifiants, des adhésifs ou encore des revêtements.

Ce document oppose son mode d'assemblage avec la soudure de deux pièces qui diminue la résistance mécanique de l'assemblage.

Ce document décrit également que la vitesse de projection du métal est suffisante pour solidariser les pièces à assembler sans atteindre leur température de fusion par conséquent en réalisant une liaison sans zone affectée par la chaleur où les propriétés mécaniques et de corrosion des métaux sont considérablement réduites.

Cependant, dans l'assemblage décrit dans ce document, l'adhérence du métal projeté par Cold Spray est essentiellement de type mécanique grâce à la déformation plastique du substrat lors de l'impact avec les premières particules projetées ce qui permet de créer des points d'accroche à l'interface substrat/particules.

Et, les particules projetées étant ductiles, la différence de résistance mécanique entre les particules projetées et le substrat influence au premier ordre sur l'accroche du métal projeté par Cold Spray.

En effet, les conditions habituelles de fabrication additive par Cold Spray permettent généralement une bonne accroche mécanique entre un matériau projeté de même nature que le substrat sur lequel il est déposé, métal sur métal par exemple. De plus, le substrat doit présenter une ductilité suffisante pour pouvoir se déformer plastiquement lors de l'impact avec les particules projetées incidentes, afin de créer des points d'accroche.

Ainsi, par exemple, la fabrication par Cold Spray d'un plot en alliage d'aluminium avec une résistance mécanique (Rm) voisine de 250 à 400MPa sur un autre matériau plus résistant ou plus dur, comme un acier (Rm > 600 à 800MPa), ou un matériau composite à fibre de carbone (Rm > 1000MPa) est très difficile avec une bonne accroche mécanique, la déformation plastique de l'acier ou du carbone sous l'impact des particules de l'alliage d'aluminium étant quasi nulle.

D'ailleurs, ce document US 2007/0194085 A1 indique que le matériau de liaison sécurise deux pièces pendant qu'un adhésif disposé entre les deux pièces prenne. Ce document indique également que la technologie d'assemblage décrite est de faible résistance.

## Résumé

L'objectif est de résoudre des inconvénients de l'état de la technique tout en procurant une souplesse de mise en oeuvre et une résistance mécanique au cisaillement au moins équivalente.

Il est proposé la réalisation d'un plot par fabrication additive pour assembler mécaniquement deux pièces tout en limitant la prise de masse de l'assemblage de manière à proposer une solution cohérente aux assemblages multi matériaux destinés à l'allègement des véhicules terrestres et aériens.

Il est proposé en outre une solution de fixation, purement mécanique, ne nécessitant pas forcément le pré-perçage débouchant d'un des deux éléments à assembler, ni l'accès aux deux côtés de l'assemblage, ce qui constitue un avantage pour les assemblages sur les chaines de montage automobile ou aéronautique par exemple.

Il est proposé la réalisation par fabrication additive à froid et à haute vitesse (Cold Spray) d'un plot dont la masse volumique est par exemple inférieure ou égale à 5,1g/cm3, sur une surface support dont la résistance mécanique est élevée par rapport à la résistance mécanique du plot. La surface support est par exemple métallique, polymère et/ou composite. Le plot sert de point de fixation pour l'assemblage avec un second matériau qui peut par exemple être métallique, polymère et/ou composite.

Finalement, le plot servant à la fixation étant obtenu par fabrication additive in situ, la géométrie du plot s'adapte à la géométrie des pièces à assembler dont la variation d'épaisseur n'est plus un frein. De même, l'assemblage entre deux pièces n'est plus limité à un assemblage plan sur plan. La fabrication additive in situ du plot est très flexible, et le plot s'adapte à l'environnement où doit être réalisé l'assemblage entre deux pièces dans la limite de la possibilité d'accès à la zone d'assemblage par un bras robotisé.

Il est proposé une surface support préalablement préparée grâce à l'impact d'un rayonnement laser (fusion et sublimation locale de la matière) avec une certaine énergie et une certaine fréquence, de manière à générer un réseau R micrométrique de trous, de diamètre D et de profondeur P, ou de lignes de largeur D, de longueur Lt et de profondeur P, avec, selon un mode de réalisation, un ratio P/D supérieur à 1.

Dans le cas particulier du réseau de lignes, une succession continue de lignes peut former un réseau de lignes de longueur $n. L_t$ ( $n \in \mathbb{R}$ ), parallèles, ou croisées par exemple, sans limitation du type de motif.

Le réseau R de trous ou de lignes de la surface support, permet la formation d'un réseau R d'excroissances micrométriques sur la surface d'appui du plot avec le support, lors de la fabrication additive du plot. Les excroissances du plot constituent des pattes d'ancrage privilégiées avec la surface support. Le plot ainsi formé sur la surface support présente une résistance optimisée au cisaillement sensiblement perpendiculairement à la direction de croissance du plot par fabrication additive, et peut être utilisé comme point d'assemblage entre matériaux de nature différente, dont la surface desdits matériaux est préalablement et localement texturée par laser.

L'inconvénient de la différence de résistance mécanique entre le matériau projeté (mou) et le matériau support (dur) ou d'une résistance mécanique équivalente, généralement rencontré en projection thermique, devient, de façon surprenante, un avantage dans le cas proposé. En effet, la résistance mécanique plus élevée ou équivalente du support favorise le remplissage du réseau R de trous ou de lignes du support par un matériau projeté plus mou/ductile ou de résistance équivalente, dans le cas où les particules projetées présentent un diamètre du même ordre de grandeur que les trous ou les lignes du support obtenus par texturation laser. L'accumulation de matière projetée dans les trous ou les lignes du support avec des énergies de projection très élevées (vitesse des particules supérieure à 500m/s) génère des forces de compression perpendiculairement aux parois des trous ou des lignes du support, renforçant l'accroche mécanique du plot proposé.

Il est en outre proposé un plot tridimensionnel en métal de faible masse volumique obtenu par fabrication additive sur un support, avec une résistance optimisée au cisaillement, et pouvant être le constituant majeur d'un assemblage entre deux matériaux de nature différente ou de même nature mais ne pouvant pas être assemblés par soudage par résistance.

De par sa fabrication très localisée à la surface d'une pièce support, et compte tenu de l'épaisseur du plot qui est du même ordre de grandeur que sa surface de contact avec la pièce support, le plot proposé n'est pas un revêtement de surface mais une pièce métallique tridimensionnelle obtenue par fabrication additive avec pour particularité de présenter un réseau R d'excroissances (remplissage des trous ou des lignes du support) servant d'ancrage dans la pièce support.

Un autre objectif est, contrairement au document US 7,624,910 B2, de proposer un plot ne nécessitant pas de soudage/malaxage par friction pour garantir une bonne résistance au cisaillement.

Par ailleurs, le plot proposé n'est pas limité aux assemblages métal sur métal.

A cet effet et suivant un premier aspect de l'invention, il est proposé, en premier lieu, un procédé de fixation d'une première pièce et d'une deuxième pièce d'assemblage mécanique entre elles tel que défini dans la revendication 1, le procédé comprenant une projection sur ladite première pièce et sur ladite deuxième pièce d'une poudre d'un matériau ductile entrainant, par agglomération de cette poudre, la fixation de la première pièce et de la deuxième pièce l'une à l'autre, le procédé comprenant une texturation d'au moins une surface de la première pièce ou de la deuxième pièce sur laquelle la projection est ensuite effectuée.

Un tel procédé augmente la résistance de l'assemblage des deux pièces en améliorant l'accroche de l'aggloméra sur celles-ci.

Diverses caractéristiques supplémentaires peuvent être prévues, seules ou en combinaison :

- la première et la deuxième pièce sont fabriquées en alliage d'aluminium dont la résistance mécanique est comprise entre 150 et 400 mégapascals ou en acier dont la résistance mécanique est comprise entre 600 et 2000 mégapascals et la poudre est de l'aluminium ou un alliage d'aluminium dont la résistance mécanique est comprise entre 100 et 400 mégapascals ;
- le procédé comprend, après la projection, une sollicitation de l'assemblage mécanique par une force de cisaillement et/ou de traction exercée entre la première pièce et la deuxième pièce ;
- la force de cisaillement exercée est supérieure à $1000 \pm 100N$ ;
- le procédé comprend, avant la projection, un positionnement de la première pièce et de la deuxième pièce l'une par rapport à l'autre, un blocage éphémère de la première pièce et de la deuxième pièce ainsi positionnées ;
- la projection est une projection à froid ;
- la projection est réalisée avec de l'air à une pression de 29 bars plus ou moins 10 pourcents et à une température de 320 degrés Celsius plus ou moins 10 pourcents ;
- la texturation est réalisée sur une surface de la première pièce et sur une surface de la deuxième pièce permettant d'augmenter la résistance de l'assemblage de deux pièces l'une à côté de l'autre ;
- ladite surface de la première pièce et ladite surface de la deuxième pièce sont disposées de manière coplanaire, les deux pièces étant l'une à côté de l'autre ;
- les pièces sont disposées au moins partiellement l'une sur l'autre, la projection immobilisant l'une des pièces contre l'autre des pièces ;
- la projection est réalisée dans une ouverture traversante de ladite pièce immobilisée, l'ouverture présentant une dimension transversale diminuant vers l'autre pièce ;
- la texturation est réalisée par un rayonnement laser ;
- le rayonnement laser comprend une succession de plusieurs impacts à un même endroit suivi d'un déplacement formant un réseau de trous texturant ladite au moins une surface ou le rayonnement laser comprend un impact continu pendant un déplacement formant un réseau de lignes texturant ladite au moins une surface ;
- la première et/ou la deuxième pièce étant fabriquée en alliage d'aluminium ou en acier, les trous ou les lignes de ladite pièce sont respectivement réalisés à une distance les un(e)s des autres de 150 micromètres ou de 200 micromètres, plus ou moins 10 pourcents afin que la rupture de l'assemblage se fasse au niveau du corps de l'agglomérat plutôt qu'au niveau de ses pattes d'ancrage (excroissances micrométriques) dans les pièces ;
- la fabrication du réseau confère à chaque trou un contour s'inscrivant dans un cercle de diamètre inférieur ou égal à sa profondeur optimisant l'accroche de l'agglomérat dans les pièces ou confère à chaque ligne un contour s'inscrivant dans un rectangle de largeur inférieure ou égale à sa profondeur ;
- la projection comprend plusieurs passes.

Les paramètres de projection cold spray sont ajustés à l'aide des connaissances de l'homme de métier de manière à former un agglomérat dense et résistant mécaniquement.

Il est proposé conformément à un deuxième aspect de la présente invention, en deuxième lieu, un assemblage tel que défini dans la revendication 12, l'assemblage comprenant une première pièce, une deuxième pièce et un agglomérat d'une poudre d'un matériau ductile fixant les pièces l'une à l'autre, au moins une surface d'une des deux pièces sur laquelle l'agglomérat est fixé étant texturée.

Un tel assemblage a une résistance accrue en améliorant l'accroche de l'aggloméra sur les deux pièces.

En variante, 10 pourcents plus ou moins 10 points de la poudre agglomérée est fondue.

Il est proposé conformément à un troisième aspect de la présente invention un véhicule terrestre ou aérien comprenant un assemblage tel que décrit précédemment, voir la revendication 13.

## Description brève des dessins

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant plusieurs modes de réalisation de l'invention et dans lesquels :

[Fig. 1] - La figure 1 illustre un exemple de zones d'un véhicule fabriquées avec des aciers THL.
[Fig. 2A]
[Fig. 2B] - Les figures 2A et 2B sont des vues schématiques d'un plot tridimensionnel selon deux modes de réalisation différents ;
[Fig. 3] - La figure 3 est une vue schématique d'un assemblage de deux pièces par un plot selon un mode de réalisation ;
[Fig. 4A]

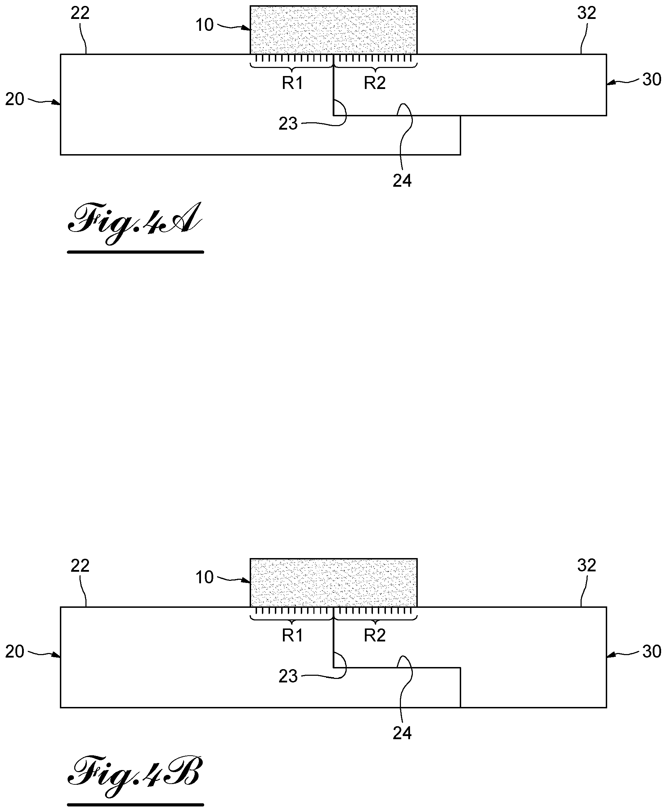

[Fig. 4B] - Les figures 4A et 4B sont des vues schématiques d'un assemblage de deux pièces par un plot selon différents modes de réalisation ;

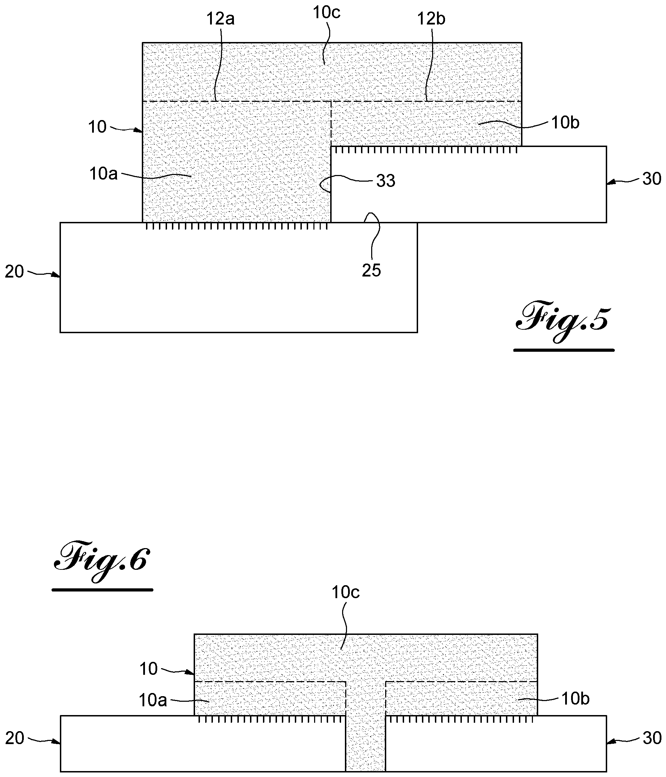

[Fig. 5] - La figure 5 est une vue schématique d'un assemblage de deux pièces par un plot selon un autre mode de réalisation ;

[Fig. 6] - La figure 6 est une vue schématique d'un assemblage de deux pièces par un plot selon un autre mode de réalisation ;

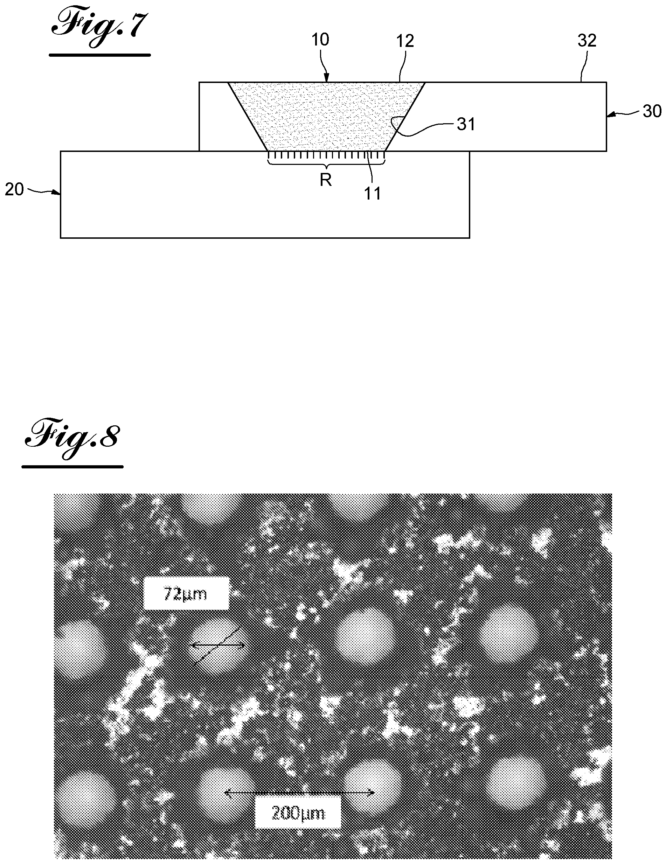

[Fig. 7] - La figure 7 est une vue schématique d'un assemblage de deux pièces par un plot selon un autre mode de réalisation ;

[Fig. 8] - La figure 8 est une vue au microscope optique d'un réseau R de trous d'une des pièces à assembler ;

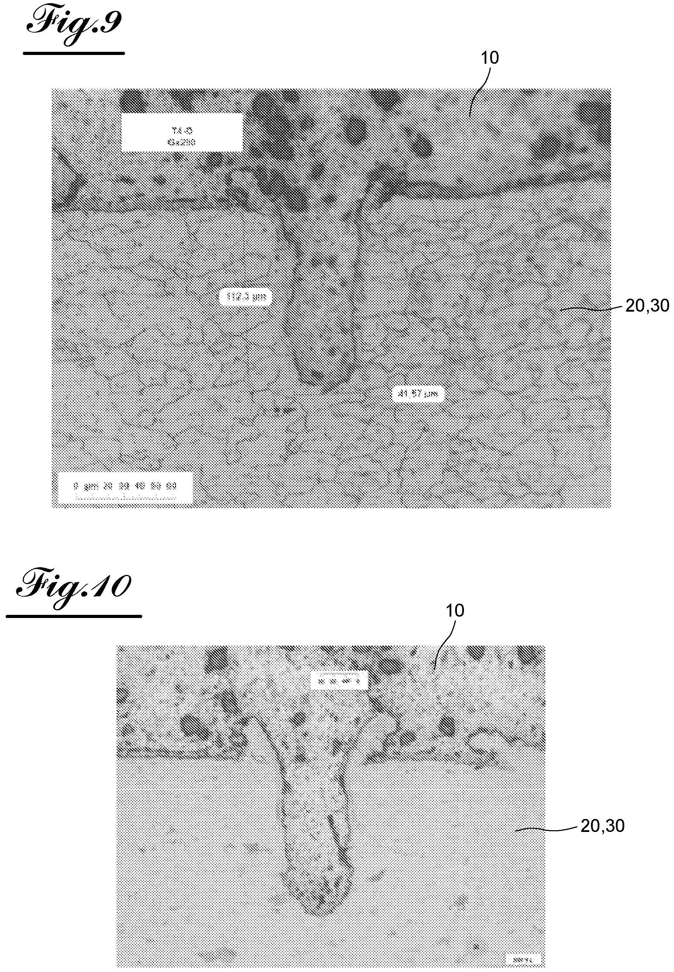

[Fig. 9] - La figure 9 est une vue au microscope optique d'un trou d'une des pièces à assembler comblé par une excroissance d'un plot selon un mode de réalisation ;

[Fig. 10] - La figure 10 est une vue semblable à la figure 9 selon un autre mode de réalisation ;

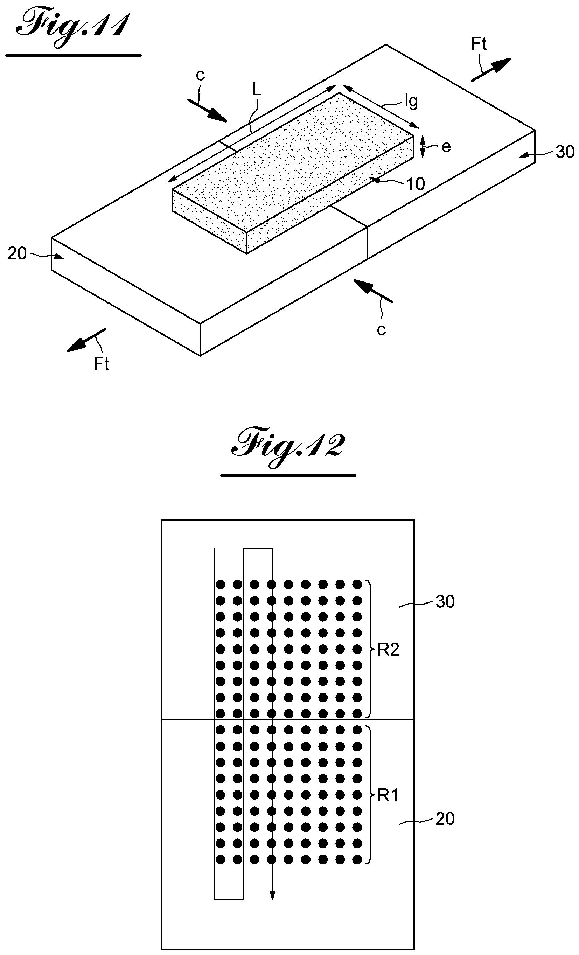

[Fig. 11] - La figure 11 est une vue schématique d'un assemblage de deux pièces par un plot selon un mode de réalisation ;

[Fig. 12] - La figure 12 est une vue schématique de deux pièces texturées montrant la progression de la projection par Cold Spray ;

[Fig. 13A]

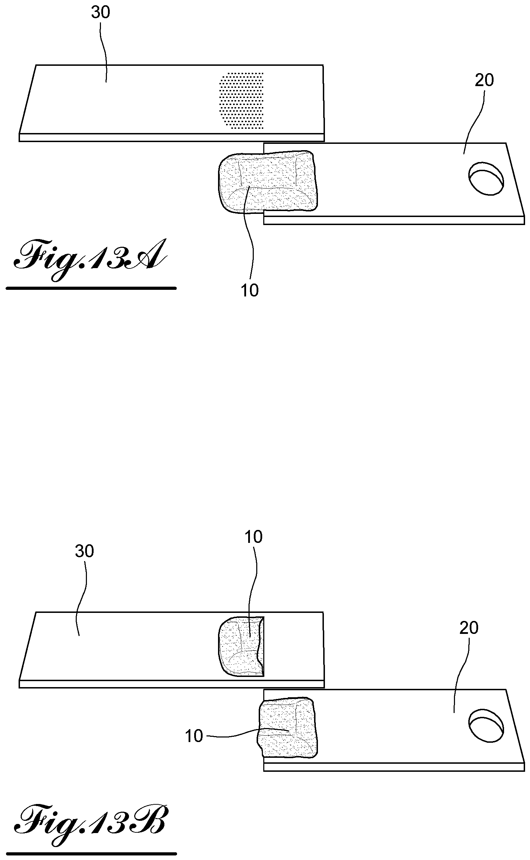

[Fig. 13B] - Les figures 13A et 13B présentent des résultats d'essais en cisaillement d'un assemblage de deux pièces par un plot selon deux modes de réalisation différents ;

[Fig. 14A]

[Fig. 14B]

[Fig. 14C]

[Fig. 14D]

[Fig. 14E]

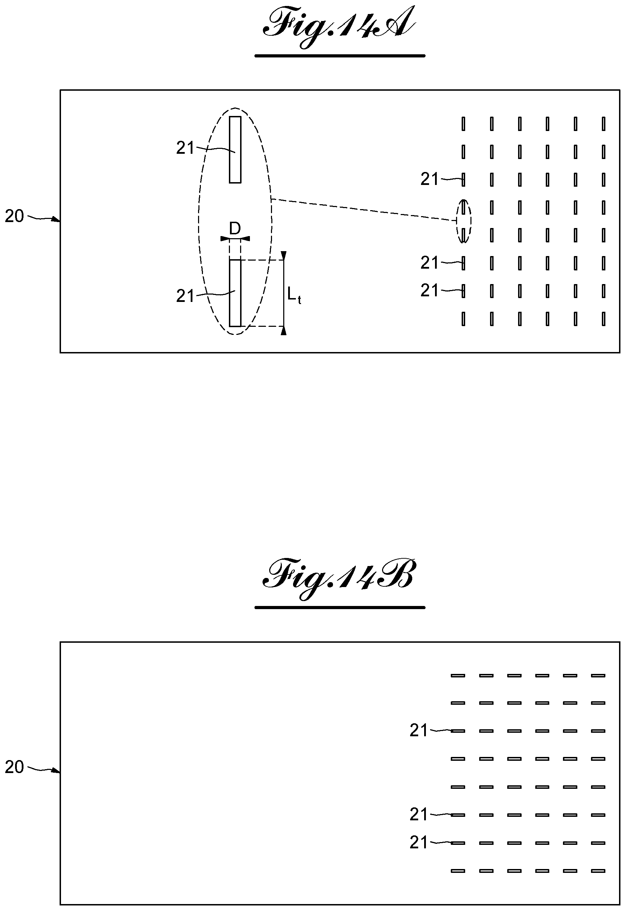

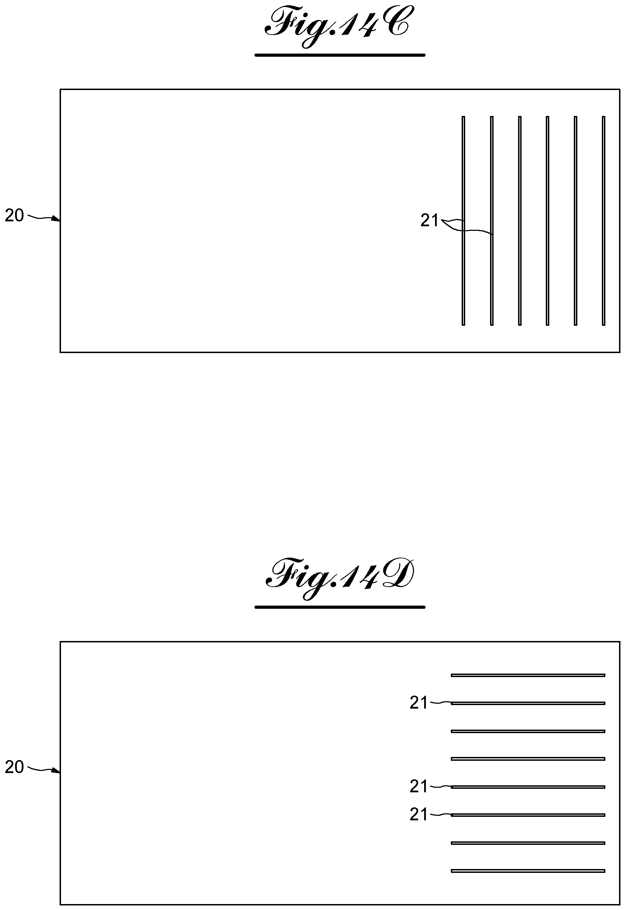

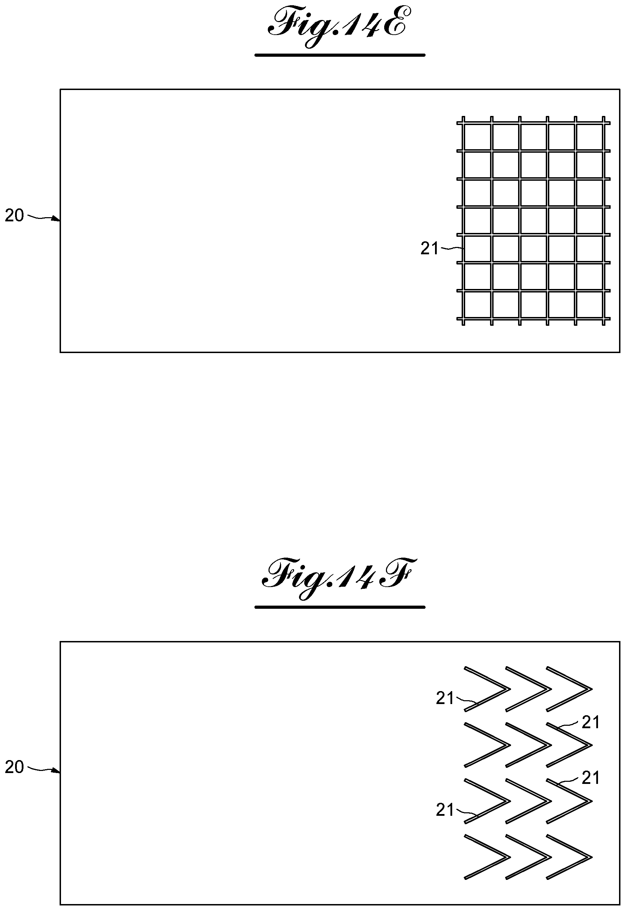

[Fig. 14F] - Les figures 14A à 14F sont des vues schématiques de dessus d'une texturation selon six modes de réalisation différents ;

[Fig. 15A]

[Fig. 15B]

[Fig. 15C]

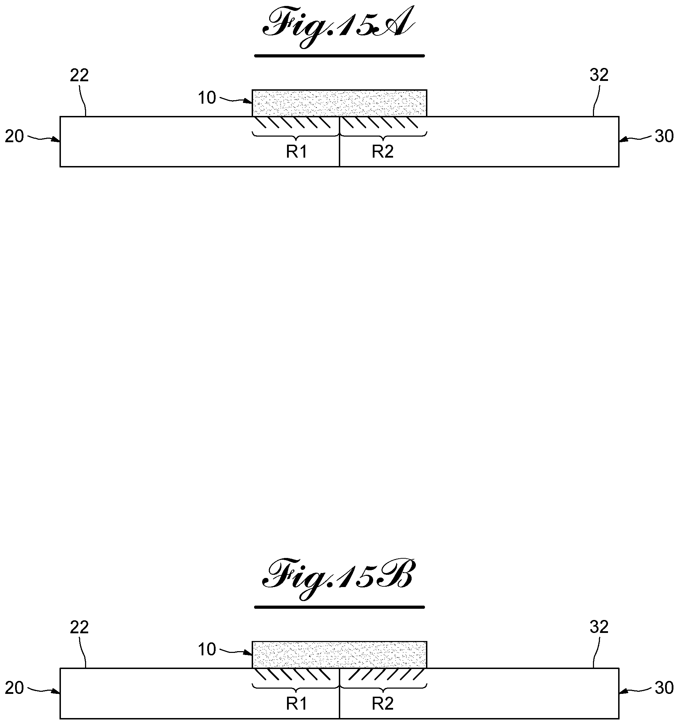

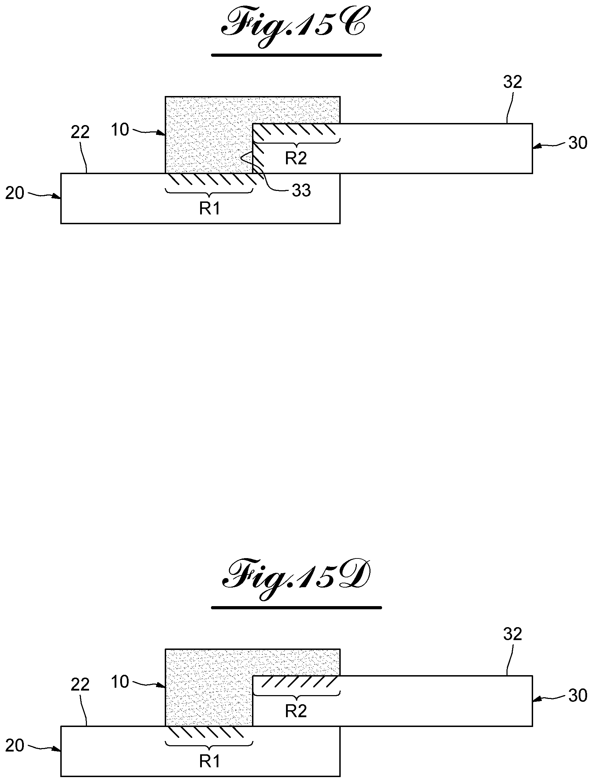

[Fig. 15D] - Les figures 15A à 15D sont des vues schématiques en coupe de côté d'une texturation selon quatre modes de réalisation différents.

## Description des modes de réalisation

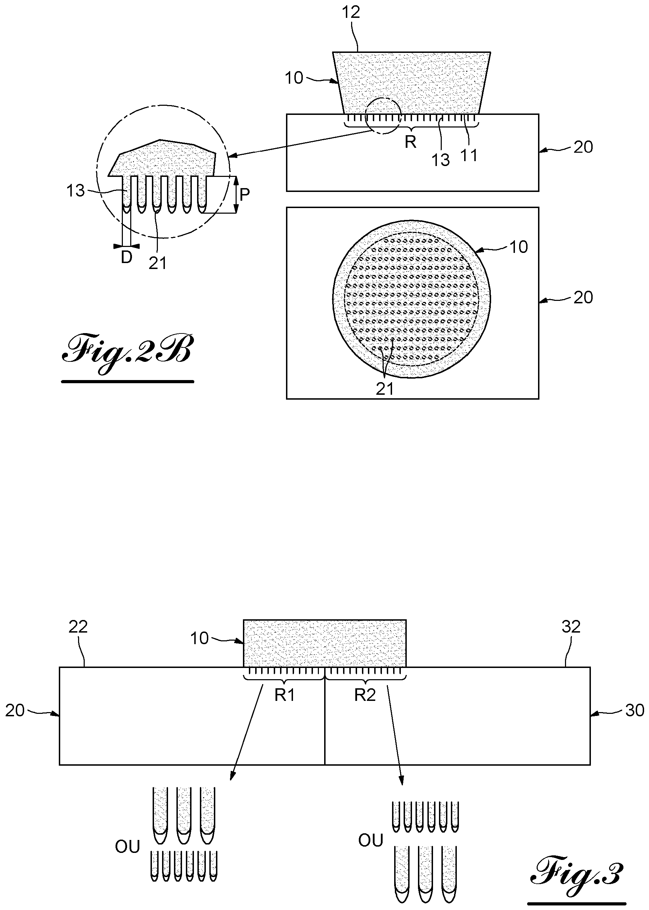

Les figures 2A et 2B représentent schématiquement un plot tridimensionnel métallique 10. Selon un mode de réalisation, la masse volumique du plot 10 est inférieure ou égale à 5,1g/cm³. Le plot 10 comprend une face de contact 11 avec une pièce 20, pouvant être métallique, polymère, ou composite à fibre de verre ou de carbone. Le plot 10 comprend également une face extérieure 12 dont la surface est, selon les modes de réalisation représentés, supérieure ou égale à la surface de la face de contact 11. Les contours des faces 11 et 12 définissent la géométrie extérieure du plot 10 qui peut être parallélépipédique ou tronconique par exemple, sans limitation du type de forme.

Le plot 10 est un agglomérat de poudre obtenu par fabrication additive grâce à la projection à froid sans fusion (Cold Spray) de particules métalliques.

Le plot 10 présente, au moins sur une partie de la face 11 de contact avec la pièce 20, un réseau R d'excroissances micrométriques 13 obtenues par remplissage total ou partiel du même réseau R constitué de trous ou de lignes micrométriques 21 préalablement fabriqués, selon un mode de réalisation, in situ par ablation/sublimation de la matière de la pièce 20.

Le réseau R de trous ou de lignes 21 de la pièce 20 est réalisé, selon un mode de réalisation, à l'aide d'un rayonnement laser.

Selon des modes de réalisation différents, le réseau R de trous ou de lignes 21 de la pièce 20 est réalisé par usinage (par exemple par perçage) de la pièce 20, par poinçonnage ou encore lors de la fabrication de la pièce 20, par exemple lors de son moulage.

Selon un mode de réalisation, les trous ou les lignes 21 sont fabriqués in situ et préalablement dans le support par ablation laser

Les trous ou les lignes micrométriques 21 peuvent être répartis périodiquement ou de façon irrégulière, et une succession continue de lignes peut former un réseau de lignes de longueur $n \cdot L_t$ ( $n \in \mathbb{R}$ ), parallèles, ou croisées par exemple, sans limitation du type de motif, comme il est représenté sur les figures 14A à 14F. Le contour des trous ou des lignes peut respectivement s'inscrire dans un cercle de diamètre D ou dans un rectangle de largeur D et de longueur Lt. Selon les modes de réalisation représentés, les trous ou les lignes 21 présentent une profondeur moyenne P supérieure ou égale à D, et sont séparés d'une distance moyenne d'au moins deux fois D de manière à procurer au plot 10 une liaison purement mécanique avec la pièce 20 avec une résistance optimisée au cisaillement dans une direction sensiblement perpendiculaire à l'axe des excroissances 13 ou des trous 21.

Selon les modes de réalisation représentés, en particulier sur les figures 15A à 15D, les parois des trous ou des lignes 21 peuvent présenter un angle, de -45 à +45°, par rapport à une direction normale à la surface extérieure 22 de la pièce 20 et/ou à la surface extérieure 32 de la pièce 30, de manière à renforcer la résistance à l'arrachement du plot 10 dans une direction normale à la surface extérieure 22 de la pièce 20 et/ou à la surface extérieure 32 de la pièce 30.

Selon un mode de réalisation, tous les trous ou les lignes 21 d'un même réseau présentent une orientation similaire, pour faciliter leur remplissage par cold spray dont la source sera orientée selon l'orientation des parois des trous ou des lignes 21.

Selon des modes de réalisation non représentés, les pièces 20 et/ou 30 présentent à la fois une texturation comprenant des trous et une texturation comprenant des lignes.

Selon certains modes de réalisation, les pièces 20 et 30 présentent des texturations différentes.

Selon un mode de réalisation, la paroi 33 de l'extrémité de la pièce 30 comprend des trous ou des lignes 21. Ces trous ou lignes 21 peuvent être inclinés suivant une orientation identique à au moins l'un des autres réseaux R1, R2 de trous ou de lignes 21.

Le plot 10 offre une résistance optimisée à la propagation d'une éventuelle fissure au niveau du point de fixation de l'assemblage, chaque excroissance 13 du plot 10 agissant individuellement comme un point de fixation.

Une résistance mécanique plus élevée ou équivalente du support 20 par rapport à celle du plot 10, favorise le remplissage total des trous. Dans ce cas, l'accumulation de particules métalliques projetées à haute vitesse et avec une énergie élevée (Cold Spray) dans les trous ou les lignes 21, lors de la fabrication additive du plot 10, génère une force radiale, perpendiculaire à l'axe de croissance des protubérances 13, et orientée en direction de la paroi des trous ou des lignes 21 garantissant le bon ancrage mécanique du plot 10 dans la pièce 20.

Le plot 10, selon les modes de réalisation représentés, qui présente une liaison purement mécanique, de type ancrage, avec une pièce support 20, peut être avantageusement utilisé pour réaliser un point de fixation mécanique avec une résistance optimisée au cisaillement entre deux pièces 20 et 30 dont la composition chimique peut être différente.

Comme le montre la figure 3, et en l'absence de perçage pré existant dans la pièce 20 ou la pièce 30, le plot 10 peut être fabriqué simultanément sur les deux pièces 20 et 30 présentant respectivement deux réseaux de trous ou de lignes R1 et R2, dont la section, la profondeur, et la répartition peut être différente, et mises en contact bout à bout avec leurs deux surfaces extérieures 22 et 32 placées au même niveau, de telle manière à obtenir un assemblage mécanique indémontable, résistant au cisaillement et à l'arrachement.

Selon un mode de réalisation, le plot 10 est obtenu par positionnement de la première pièce 20 et de la deuxième pièce 30 l'une par rapport à l'autre, un blocage éphémère de la première pièce 20 et de la deuxième pièce 30 ainsi positionnées puis par projection de la poudre. Le blocage éphémère est débloqué après projection.

Pour une résistance à la flexion optimisée de l'assemblage entre les pièces 20 et 30, comme le montre la figure 4A, la pièce 20 peut avantageusement présenter une encoche sur une partie de son extrémité et sur une partie de son épaisseur de manière à former une face d'appui 24 ainsi qu'une paroi 23 perpendiculaire à la face d'appui 24. Ainsi, l'intégralité ou une partie de l'extrémité de la pièce 30 peut être plaquée contre la face 24 et la paroi 23.

De manière similaire, comme représenté sur la figure 4B, les deux pièces 20 et 30 peuvent chacune présenter une encoche de manière à ce que chaque pièce 20, 30 repose sur l'autre pièce 20, 30.

Comme le montre la figure 5, en l'absence de perçage pré existant dans la pièce 20 ou la pièce 30, le plot métallique 10 peut être utilisé pour réaliser un second type d'assemblage entre deux pièces 20 et 30, lorsque la pièce 30 recouvre partiellement la pièce 20 et est plaquée sur une surface d'appui 25.

Un premier plot 10a est fabriqué sur la pièce 20 avec une limitation de sa croissance par fabrication additive sur la paroi 33 de l'extrémité de la pièce 30. Le premier plot 10a présente une épaisseur supérieure à l'épaisseur de la pièce 30 ou de la partie de la pièce 30 en appui sur la surface 25.

Un deuxième plot 10b, de même composition chimique que le premier plot 10a, est fabriqué sur la pièce 30 avec une épaisseur telle que la surface extérieure 12b du deuxième plot 10b soit au même niveau que la surface extérieure 12a du premier plot 10a.

Enfin un volume de matière 10c, de même composition chimique que les plots 10a et 10b est fabriqué par Cold Spray sur les surfaces extérieures 12a et 12b de manière à assembler mécaniquement les deux plots 10a et 10b et par conséquent à assembler mécaniquement les pièces 20 et 30.

Selon un mode de réalisation, les étapes de fabrication des plots 10a et 10b et du volume de matière 10c sont réalisées en une seule opération de fabrication additive par Cold Spray ne formant qu'une seule et même unité 10.

Dans le cas particulier où les pièces à assembler 20 et 30 ne sont pas jointives par deux de leurs extrémités, et ne présentent pas de surface de recouvrement, le volume de matière 10c obtenu par Cold Spray peut présenter une géométrie particulière (en forme de T avec une vue en coupe) telle que celle présentée sur la figure 6, de manière à combler l'espace entre les pièces 20 et 30.

Selon un mode de réalisation, les étapes de fabrication des plots 10a et 10b et du volume de matière 10c peuvent être réalisées en une seule opération de fabrication additive par Cold Spray ne formant qu'une seule et même unité 10.

La fabrication d'un plot 10 comprenant trois parties 10a, 10b et 10c ou de deux plots 10a et 10b et d'un volume de matière 10c solidaires lorsque les pièces 20 et 30 ne sont pas jointives, tel que représenté sur la figure 6, permet de résoudre un problème de non déposition de la poudre d'aluminium si cette dernière est projetée par Cold Spray sur des pièces 20 et 30 non jointives sans avoir préalablement comblé l'espace présent entre les pièces 20 et 30 par un volume de matière 10c.

Comme le montre la figure 7, et compte tenu de la forme extérieure du plot 10 qui peut être tronconique, la face 12 présentant une superficie supérieure à la superficie de la face 11 de contact avec la pièce 20, le plot 10 peut être fabriqué après qu'une pièce 30, présentant un perçage tronconique dont le volume est légèrement supérieur au volume du futur plot 10, ait été plaquée avec un recouvrement partiel sur la pièce 20.

Dans ce cas, le plot 10 est ancré mécaniquement dans la pièce 20 à l'aide du réseau R de trous ou de lignes et des excroissances 13, et continue sa croissance par fabrication additive Cold Spray sur la paroi extérieure 31 du perçage tronconique de la pièce 30.

Dans ce cas particulier où une pièce de l'assemblage 30 est pré percée et selon le mode de réalisation représenté, le plot 10 ne dépasse pas la surface extérieure 32 de la pièce 30 ce qui peut être un avantage pour l'encombrement de l'assemblage mécanique réalisé entre les pièces 20 et 30.

Selon des modes de réalisation différents, le perçage de la pièce 30 a une forme quelconque, s'évasant au moins sur une partie du perçage, de sorte que la pièce 30 soit maintenue par le plot 10, le plot 10 remplissant au moins en partie le perçage.

Pour tous les exemples illustrés précédemment, le ou les réseaux R de trous ou de lignes des pièces 20 et/ou 30 sont, selon un mode de réalisation, obtenus à l'aide d'un rayonnement laser caractérisé par une puissance PL et une fréquence F. La profondeur P des trous ou des lignes du/des réseaux R est, selon des modes de réalisation, supérieure ou égale au diamètre ou à la largeur moyen(ne) D des trous ou des lignes, de manière à ce que le ratio P/D soit toujours supérieur à l'unité.

Le contrôle du ratio P/D est garanti par la focalisation et le diamètre du rayonnement laser et par le nombre N d'impacts laser au même endroit, ou la vitesse linéaire de déplacement du laser, pour une puissance PL et une fréquence F données. Pour un matériau donné, il est communément admis que plus la puissance et plus le nombre d'impacts est important et/ou que plus la vitesse de déplacement linéaire est faible pour une fréquence donnée, plus le trou ou la ligne est profond(e) dans une certaine limite correspondant à la possibilité de vaporiser et d'extraire le matériau soumis au rayonnement laser du trou en cours de formation. Par ailleurs, plus la fréquence laser est élevée, pour une puissance et un nombre d'impacts et/ou une vitesse linéaire de déplacement du laser donnés, plus la profondeur du trou est faible.

La figure 8 montre par exemple un réseau R de trous, avec P/D environ égal à 2,7, obtenu à l'échelle du laboratoire par un laser de 20W plus ou moins 10% avec une fréquence de 20kHz plus ou moins 10% sur une surface en acier avec une résistance mécanique de 900MPa. Dans ce cas particulier, les trous sont espacés de 200$\mu$m environ, et présentent un diamètre moyen proche de 70 à 75$\mu$m.

Dans les conditions de la figure 8, un seul trou est obtenu à la suite de 90 impacts laser consécutifs en 4,5.10$^{-3}$ secondes. Pour un plot 10 présentant par exemple une longueur, une largeur et une épaisseur de 20, 10, et 2mm respectivement, 10 à 20 trous-excroissances/mm$^2$ sont généralement nécessaires pour assurer une résistance mécanique optimale du futur assemblage. Pour ce plot avec une superficie d'appui de 200mm$^2$, fabriqué sur une surface en acier avec une résistance mécanique de 900MPa, les conditions laser évoquées précédemment conduisent à un temps de préparation laser de 9 à 18s environ, à l'échelle du laboratoire.

En considérant un débit massique de matière projetée de 1 à 3kg/h, à l'échelle du laboratoire ou en conditions industrielles respectivement, le plot 10 majoritairement à base d'aluminium par exemple, avec une densité proche de 2,7g.cm$^{-3}$ et un volume de 0,4cm$^3$, présente une masse proche de 1,1g, et peut théoriquement être fabriqué en 0,3s ou 0,1s seulement. Ainsi, le temps de fabrication est essentiellement limité par le déplacement du bras robotisé pour la réalisation du plot 10 en plusieurs passes, avec un débit de matière ajusté pour la réalisation du plot avec la géométrie souhaitée. Dans ces conditions le temps de projection cold spray pour la réalisation d'un plot 10 avec un volume de 0,4cm$^3$ est généralement compris entre 2 et 3s.

Selon un mode de réalisation différent, à l'échelle industrielle, chaque trou est obtenu à la suite de 9 impacts avec un laser de 200W plus ou moins 10%. Dans ces conditions optimales, le temps de préparation laser est réduit entre 0,9 et 1,8s. Ainsi, avec des paramètres industriels, la fabrication d'un plot 10 solidement ancré dans un support en acier avec une résistance mécanique de 900MPa peut être réalisée avec un temps compris entre 2,9 et 4,8s, qui est compatible avec une application dans le milieu automobile ou aéronautique.

La figure 9 montre l'exemple du remplissage avec de l'aluminium projeté par Cold Spray d'un trou obtenu par un laser (P/D égal à 2,7) sur une plaque en acier avec une résistance mécanique de 900MPa.

La figure 10 présente un point positif de la texturation laser de l'acier. Chaque trou est réalisé par plusieurs impacts du laser à puissance constante formant une protubérance d'acier autour du trou par fusion locale de l'acier, évacuation par la pression locale exercée lors de l'impact et solidification de l'acier.

Cette protubérance constitue un effet d'ancrage supplémentaire pour le plot 10 obtenu par Cold Spray.

Les figures 8, 9 et 10 illustrent parfaitement la possibilité de fabriquer un plot avec une multitude d'excroissances micrométriques ainsi que le très bon remplissage des trous par l'aluminium projeté qui est plus ductile que l'acier. Dans ces conditions de fabrication, le plot 10 en aluminium avec une résistance mécanique de 100MPa, une épaisseur de 2mm et une superficie de contact de 200mm$^2$ sur une plaque en acier avec une résistance mécanique de 900MPa présente une résistance au cisaillement de l'ordre de 2 000N, soit environ 200kg par plot.

Selon un mode de réalisation, le plot 10 est majoritairement constitué à base d'aluminium et peut contenir les éléments silicium (Si), manganèse (Mn), et/ou magnésium (Mg) de manière à présenter des caractéristiques mécaniques augmentées, généralement comprises entre 200 et 400MPa en fonction de la teneur en éléments d'alliage. Dans ces conditions un plot 10 en alliage d'aluminium avec une épaisseur de 2mm et une superficie de contact de 200mm$^2$ sur une plaque en acier avec une résistance mécanique de 900MPa présente une résistance au cisaillement de l'ordre de 4 000 à 8 000N, soit environ 400 à 800kg par plot.

Dans certaines applications particulières (aéronautiques par exemple) le plot 10 peut être majoritairement constitué à base de titane, et peut contenir les éléments aluminium ou vanadium. Dans le cas particulier d'un plot 10 en Ti-6Al-4V (TA6V) avec une résistance mécanique de 1100MPa pour l'assemblage mécanique entre une plaque en acier THL et une plaque en alliage de titane, le plot 10, avec une épaisseur de 2mm et une superficie de contact avec la plaque en acier de 200mm$^2$, présente une résistance au cisaillement de 22 000N, soit 2,2t par plot.

Les différents exemples précédents, avec une texturation de surface permettant la réalisation de réseaux de trous R1 et R2, sont tout à fait transposables dans le cas où les réseaux R1 et R2 sont constitués de lignes.

Selon différents modes de réalisation, la pièce 20 est fabriquée en métal, polymères et/ou en composite. La pièce 30 est fabriquée en métal, polymères et/ou en composite.

Afin d'accroître la résistance de l'assemblage, le matériau utilisé pour la poudre projetée présente, conformément à la présente invention, une résistance mécanique inférieure ou égale à la résistance mécanique du matériau de la ou des pièces 20, 30 support.

Selon un mode de réalisation, lors de la projection sur l' acier texturé, la poudre ayant une résistance mécanique plus faible se déforme plastiquement et s'accumule dans les trous ou les lignes formé(e)s, par exemple par le laser, et génère des contraintes favorables à la tenue mécanique de l'assemblage.

Selon un mode de réalisation, lors de la projection sur l' alliage d'aluminium texturé deux cas de figure peuvent se présenter :

- la poudre a une résistance mécanique plus faible que la résistance mécanique de l'alliage d'aluminium et le même effet que sur l'acier texturé est observé,
- la poudre a une résistance mécanique équivalente à celle de l'alliage d'aluminium et la texturation est partiellement ou totalement déformée lors de la projection, par exemple par cold spray, ce qui conduit à un 'malaxage' des deux alliages d'aluminium avec une très bonne résistance mécanique.

Dans ce dernier cas de figure la texturation de la pièce 30 en alliage d'aluminium n'est plus visible après projection. Une observation micrographique en coupe indique que l'aluminium de la poudre et l'alliage d'aluminium de la pièce 30 se sont mélangés.

Selon un mode de réalisation, si la poudre présente une résistance mécanique supérieure à la résistance mécanique de la pièce 30 la moins dure (pièce en alliage d'aluminium) la projection, par exemple par cold spray, entraine une abrasion de la pièce 30 la moins dure, sans accroche de la poudre, ni formation d'un plot 10.

Lorsque l'assemblage mécanique est soumis à une force de cisaillement et/ou de traction exercée entre la première pièce (20) et la deuxième pièce (30), il est préféré, selon un mode de réalisation, que la rupture en traction et/ou en cisaillement du plot 10, respectivement par une force Ft appliquée suivant une direction orthogonale à un plan d'intersection des pièces 20 et 30 et/ou par une force c appliquée suivant une direction parallèle aux surfaces 22 et 32 des pièces 20 et 30 en contact avec le plot 10 et parallèle au plan d'intersection des pièces 20 et 30 comme représenté sur la figure 11, se fasse au niveau du corps du plot 10 plutôt qu'au niveau de ses pattes d'ancrage (excroissances micrométriques) avec les pièces 20 et 30.

Pour se faire, il a été établi que la superficie totale des pattes d'ancrage Stpa, de section circulaire ou rectangulaire, au niveau desdites surfaces 22 et 32 doit être supérieure à la superficie d'une section Ss du plot 10 suivant un plan coplanaire à la force exercée pour le cisaillement et coplanaire auxdites surfaces 22 et 32.

Ainsi :

[Math. 1-1]

$$Stpa > Ss$$

[Math. 1-2]

$$Spa \times \mathrm{Npa} > e \times lg$$

Avec :

- Spa une surface moyenne d'une patte d'ancrage du plot 10 ;
- Npa le nombre de pattes d'ancrages du plot 10 ;
- e une épaisseur du plot 10 suivant une direction perpendiculaire à la force c de cisaillement et perpendiculaire aux surfaces 22 et 32 ;
- 1g une largeur du plot 10 suivant une direction parallèle à la force c de cisaillement et parallèle aux surfaces 22 et 32.

[Math. 1-3]

$$[Stpa] \times \left[d_{pa} \times \mathrm{L} \times lg\right] > e \times lg$$

Avec :

- dpa une densité par unité de surface de pattes d'ancrage du plot 10 ;
- L une longueur du plot 10 suivant une direction perpendiculaire à la force c de cisaillement et parallèle aux surfaces 22 et 32.

[Math. 1-4]

$$d_{pa} > \frac{e}{\mathrm{Stpa} \times \mathrm{L}}$$

Avec $\mathrm{Stpa} = \pi \times \frac{D^2}{4}$ dans le cas d'une patte d'ancrage de section circulaire (réseaux de trous) ou Stpa = $D.\,L_t$ dans le cas d'une patte d'ancrage de section rectangulaire (réseaux de lignes).

En prenant comme exemple un plot 10 dont la longueur L est de 20mm, la largeur lg est de 10mm et l'épaisseur e est de 2mm, le diamètre moyen des pattes d'ancrage de section circulaire D étant, par exemple, de 80$\mu$m, la densité de pattes d'ancrage dpa par millimètre carré doit être supérieure à environ 20.

Un tel plot, fabriqué en aluminium dont la résistance mécanique Rm est égale à 100MPa, résisterait à un effort de traction Ft égal à :

[Math. 2-1]

$$F_t = R_m \times e \times lg$$

[Math. 2-2]

$$F_t = 100 \times 2 \times 10$$

[Math. 2-3]

$$F_t = 2000N$$

Selon un autre mode de réalisation, un tel plot, fabriqué en alliage d'aluminium contenant les éléments Si et Mg, dont la résistance mécanique Rm est égale à 300MPa, résisterait à un effort de traction Ft égal à :

[Math. 3-1]

$$F_t = R_m \times e \times lg$$

[Math. 3-2]

$$F_t = 300 \times 2 \times 10$$

[Math. 3-3]

$$F_t = 6000N$$

En prenant comme exemple un second plot 10 dont la longueur L est de 20mm, la largeur lg est de 10mm et l'épaisseur e est de 2mm, la largeur et la longueur moyenne des pattes d'ancrage de section rectangulaire étant, par exemple, de 80$\mu$m et de 1mm (inférieur à 1g), respectivement, la densité de pattes d'ancrage dpa par millimètre carré doit être supérieure à environ 1,3.

Des essais ont été réalisés pour confirmer ces affirmations théoriques.

Ainsi, les pièces 20 et 30 sont respectivement réalisées en acier et en alliage d'aluminium.

Selon le mode de réalisation décrit, la pièce 20 a une résistance mécanique comprise entre 600 et 900 MPa. La pièce 30 a une résistance mécanique comprise entre 150 et 200MPa.

Selon des modes de réalisation différents, l'alliage d'aluminium appartient à une des séries 3000 à 6000. L'alliage comprend par exemple de l'aluminium et du magnésium, de l'aluminium, du magnésium et du silicium ou encore de l'aluminium, du manganèse et du silicium.

La texturation des pièces 20 et 30 est faite par des impulsions au laser à une puissance de 20W plus ou moins 10% et à une fréquence de 20 kHz plus ou moins 10%. 5 impulsions par trou sont faites dans la pièce en alliage d'aluminium. 90 impulsions par trou sont faites dans la pièce en acier.

La texturation est faite pour chaque plaque sur une zone de 10mm par 10mm.

La texturation de la pièce en alliage d'aluminium créé des trous de diamètre D moyen de 80$\mu$m espacés de 150$\mu$m plus ou moins 10% les uns des autres. La texturation de la pièce en acier créé des trous espacés, pour un premier mode de réalisation, de 400$\mu$m plus ou moins 10% les uns des autres ou, pour un deuxième mode de réalisation, de 200$\mu$m plus ou moins 10% les uns des autres.

La projection par Cold Spray pour créer le plot 10 a été faite avec le système de projection à froid Kinetic 3000 (CGT GmbH, Allemagne) comprenant une buse de type MOC 24.

La projection par Cold Spray a été faite avec de la poudre d'aluminium Al 1050 de granulométrie comprise entre 30$\mu$m et 56$\mu$m. La poudre d'aluminium a une résistance mécanique comprise entre 100 et 150 MPa.

Selon des modes de réalisation différents, la poudre d'aluminium appartient à la famille 1000 ou encore 3000 à 6000.

Selon ce mode de réalisation, environ 90% plus ou moins 10 points des grains formant la poudre n'ont pas fondu.

La projection par Cold Spray a été faite avec comme gaz porteur de l'air, à une pression de 29bar plus ou moins 10%, à une température du gaz de 320°C plus ou moins 10%. Le débit du gaz porteur est de 80l/min plus ou moins 10%. Le plateau de poudre tournait à 20 tours par minute plus ou moins 10%. Le pas était de 3mm plus ou moins 10%, la distance de projection de 25mm plus ou moins 10% et la vitesse de translation de 30mm/s plus ou moins 10%. La projection a été réalisée en 3 passes.

La projection par Cold Spray a été faite suivant la progression représentée sur la figure 12.

Une fois le plot 10 formé pour assembler les pièces 20 et 30, des efforts de traction et de cisaillement tel que présentés sur la figure 11 ont été réalisés de façon indépendante jusqu'à rupture. La figure 13A est une représentation schématique du résultat d'un essai réalisé sur un assemblage fabriqué selon le premier mode de réalisation dans lequel la texturation de la pièce en acier a créé des trous espacés de 400$\mu$m plus ou moins 10% les uns des autres, suite aux efforts de traction ou suite aux efforts de cisaillement. La figure 13B est une représentation schématique du résultat d'un essai réalisé sur un assemblage fabriqué selon le deuxième mode de réalisation dans lequel la texturation de la pièce en acier a créé des trous espacés de 200$\mu$m plus ou moins 10% les uns des autres, suite aux efforts de traction ou suite aux efforts de cisaillement.

On remarque que, sur la figure 13A, l'assemblage s'est rompu au niveau de la jonction des pattes d'ancrage du plot 10 sur la pièce 30 et du corps du plot 10, le corps restant intact. Sur la figure 13B, l'assemblage s'est rompu au niveau du corps du plot 10, les pattes d'ancrage du plot 10 au niveau des pièces 20 et 30 restant solidaires du corps.

Les essais ont donc révélé que, pour de tels paramètres de fabrication du plot 10, un espacement de 400$\mu$m entre les trous était trop important pour que le plot 10 cède au niveau de son corps et non au niveau de ses pattes d'ancrages.

Ce résultat coïncide avec le calcul précédemment effectué qui montre que pour un plot 10 de longueur L égale à 20mm, de largeur lg égale à 10mm, d'épaisseur e égale 2mm et de diamètre moyen des pattes d'ancrage D égal à 80$\mu$m, la densité de pattes d'ancrage dpa par millimètre carré doit être supérieure à environ 20. Les pattes d'ancrage du plot 10 doivent donc être en moyenne espacées au maximum d'environ 220$\mu$m les unes des autres.

Des essais ont été conduits avec un assemblage alliage d'aluminium/acier. Une texturation laser préalable de la pièce support en acier a permis de générer un réseau R de trous de 50$\mu$m de diamètre, profonds de 120$\mu$m, et distants de 200$\mu$m sur une superficie de 200mm$^2$. Pour un tel assemblage, l'arrachement se produit systématiquement dans le corps du plot en aluminium pour un effort de 2200$\pm$100N.

Le plot reste solidement accroché à la pièce support grâce aux pattes d'ancrage (excroissances micrométriques). Ceci indique que l'effort d'arrachement de l'assemblage dépend essentiellement de la résistance mécanique et de la géométrie du plot 10 qui peuvent être ajustée en fonction de la résistance mécanique souhaitée pour l'assemblage hybride pour une application automobile.

Des essais comparatifs ont été conduits pour assembler une plaque en alliage d'aluminium sur une plaque en acier (résistance mécanique de 900MPa) de 2mm d'épaisseur (recouvrement de 20mm) en projetant de l'aluminium pur par Cold Spray dans un perçage réalisé dans la plaque en alliage d'aluminium. Des essais de cisaillement ont été conduits sur plusieurs assemblages obtenus avec différents paramètres Cold Spray pour obtenir la meilleure accroche et la meilleure densité possible de l'aluminium projeté. Force est de constater que la rupture se produit systématiquement à l'interface entre l'aluminium projeté et la pièce support en acier, témoignant d'une faible résistance au cisaillement des assemblages. En effet, pour une projection Cold Spray sur une superficie de 200mm$^2$ et sur une épaisseur de 2mm la rupture se produit pour un effort de cisaillement de 1000$\pm$100N ce qui n'est pas satisfaisant pour une application automobile ou aérospatiale.

Les paramètres et les caractéristiques des exemples ci-dessus sont aptes à être considérés indépendamment pour la réalisation d'autres modes de réalisation.

## Revendications

1. Procédé de fixation d'une première pièce (20) et d'une deuxième pièce (30) d'assemblage mécanique entre elles, le procédé comprenant une projection sur ladite première pièce (20) et sur ladite deuxième pièce (30) d'une poudre d'un matériau ductile entrainant, par agglomération de cette poudre, la fixation de la première pièce (20) et de la deuxième pièce (30) l'une à l'autre, le procédé étant **caractérisé en ce qu'**il comprend une texturation d'au moins une surface de la première pièce (20) ou de la deuxième pièce (30) sur laquelle la projection est ensuite effectuée, **en ce que** la résistance mécanique du matériau ductile dont est formé la poudre est inférieure ou égale à celle des première (20) et deuxième (30) pièces, et **en ce que** la texturation comprend la fabrication d'un réseau (R1, R2) de trous (21) par une succession de plusieurs impacts à un même endroit d'un rayonnement laser suivi d'un déplacement du rayonnement laser, ladite fabrication du réseau (R1, R2) est faite en fonction de la projection de la poudre de sorte que la densité (dpa) des trous ou des lignes (21) du réseau (R1, R2) par unité de surface est supérieure à :

$$\frac{e}{Stpa \times L}$$

avec :

- (e) une épaisseur de l'aggloméré de la poudre (10) suivant une direction perpendiculaire à ladite surface de la première pièce (20) ou de la deuxième pièce (30) ;
- (Stpa) la section desdits trous ou desdites lignes dudit réseau ;
- (L) une longueur de l'aggloméré de la poudre (10) suivant une direction parallèle à la direction d'une force (Ft) de traction entre la première pièce (20) et la deuxième pièce (30).

\

2. Procédé de fixation selon la revendication 1, **caractérisé en ce que** la première et la deuxième pièce (20, 30) sont fabriquées en alliage d'aluminium dont la résistance mécanique est comprise entre 150 et 400 mégapascals ou en acier dont la résistance mécanique est comprise entre 600 et 2000 mégapascals et la poudre est de l'aluminium ou un alliage d'aluminium dont la résistance mécanique est comprise entre 100 et 400 mégapascals.

3. Procédé de fixation selon l'une quelconque des revendications précédentes, **caractérisé en ce qu'**il comprend, après la projection, une sollicitation de l'assemblage mécanique par une force de cisaillement et/ou de traction exercée entre la première pièce (20) et la deuxième pièce (30).

4. Procédé de fixation selon l'une quelconque des revendications précédentes, **caractérisé en ce que** la projection est une projection à froid, réalisée avec de l'air à une pression de 29 bars plus ou moins 10 pourcents et à une température de 320 degrés Celsius plus ou moins 10 pourcents.

5. Procédé de fixation selon l'une quelconque des revendications précédentes, **caractérisé en ce que** la texturation est réalisée sur une surface de la première pièce (20) et sur une surface de la deuxième pièce (30).

6. Procédé de fixation selon la revendication précédente, **caractérisé en ce que** ladite surface de la première pièce (20) et ladite surface de la deuxième pièce (30) sont disposées de manière coplanaire, les deux pièces (20, 30) étant l'une à côté de l'autre.

7. Procédé de fixation selon l'une quelconque des revendications précédentes, **caractérisé en ce que** les pièces (20, 30) sont disposées au moins partiellement l'une sur l'autre, la projection immobilisant l'une des pièces (20, 30) contre l'autre des pièces (20, 30).

8. Procédé de fixation selon l'une quelconque des revendications précédentes, **caractérisé en ce que** la texturation est réalisée par un rayonnement laser.

9. Procédé de fixation selon la revendication précédente, **caractérisé en ce que** le rayonnement laser comprend une succession de plusieurs impacts à un même endroit suivi d'un déplacement formant un réseau (R1, R2) de trous (21) texturant ladite au moins une surface ou **en ce que** le rayonnement laser comprend un impact continu pendant un déplacement formant un réseau de lignes (21) texturant ladite au moins une surface.

10. Procédé de fixation selon la revendication précédente, **caractérisé en ce que**, la première et/ou la deuxième pièce (20, 30) étant fabriquée en alliage d'aluminium ou en acier, les trous ou les lignes (21) de ladite pièce (20, 30) sont respectivement réalisés à une distance les un(e)s des autres de 150 micromètres ou de 200 micromètres, plus ou moins 10 pourcents.

11. Procédé de fixation selon l'une quelconque des revendications 9 ou 10, **caractérisé en ce que** la fabrication du réseau (R1, R2) confère à chaque trou (21) un contour s'inscrivant dans un cercle de diamètre (D) inférieur ou égal à sa profondeur (P) ou confère à chaque ligne (21) un contour s'inscrivant dans un rectangle de largeur (D) inférieure ou égale à sa profondeur (P).

12. . Assemblage comprenant une première pièce (20), une deuxième pièce (30) et un aggloméré d'une poudre d'un matériau ductile fixant les pièces (20, 30) l'une à l'autre, l'assemblage étant **caractérisé en ce que** la résistance mécanique dudit matériau ductile est inférieure ou égale à celle des première (20) et deuxième (30) pièces, **en ce qu'**au moins une surface d'une des deux pièces (20, 30) sur laquelle l'aggloméré est fixé est texturée, et **en ce que** la texturation comprend un réseau (R1, R2) de trous (21) dont la densité (dpa) par unité de surface est supérieure à :

$$\frac{e}{Stpa \times L}$$

avec :

- (e) une épaisseur de l'aggloméré de la poudre (10) suivant une direction perpendiculaire à ladite surface de la première pièce (20) ou de la deuxième pièce (30) ;
- (Stpa) la section desdits trous ou desdites lignes (21) dudit réseau ;
- (L) une longueur de l'aggloméré de la poudre (10) suivant une direction parallèle à la direction d'une force (Ft) de traction entre la première pièce (20) et la deuxième pièce (30).

**13.** Véhicule terrestre ou aérien comprenant un assemblage selon la revendication 12.

**Patentansprüche**

**1.** Verfahren zum Befestigen eines ersten Teils (20) und eines zweiten Teils (30) einer mechanischen Anordnung untereinander, wobei das Verfahren ein Sprühen auf den ersten Teil (20) und auf den zweiten Teil (30) eines Pulvers aus duktilem Material umfasst, wodurch durch Agglomeration dieses Pulvers die Befestigung des ersten Teils (20) und des zweiten Teils (30) aneinander erfolgt, wobei das Verfahren **dadurch gekennzeichnet ist, dass** es eine Texturierung mindestens einer Oberfläche des ersten Teils (20) oder des zweiten Teils (30) umfasst, auf der das Sprühen dann durchgeführt wird, dadurch, dass der mechanische Widerstand des duktilen Materials, aus dem das Pulver gebildet ist, kleiner als oder gleich demjenigen des ersten (20) und zweiten (30) Teils ist, und dadurch, dass die Texturierung die Herstellung eines Netzes (R1, R2) von Löchern (21) durch eine Aufeinanderfolge von mehreren Einwirkungen auf eine gleiche Stelle eines Laserstrahls umfasst, gefolgt von einer Verschiebung des Laserstrahls, wobei die Herstellung des Netzes (R1, R2) in Funktion des Sprühens des Pulvers erfolgt, so dass die Dichte (dpa) der Löcher oder der Zeilen (21) des Netzes (R1, R2) pro Flächeneinheit grösser ist als:

$$\frac{e}{Stpa \times L}$$

wobei:

- (e) eine Dichte des Agglomerats des Pulvers (10) gemäß einer senkrechten Richtung zu der Oberfläche des ersten Teils (20) oder des zweiten Teils (30) ist;
- (Stpa) der Schnitt der Löcher oder der Linien des Netzes ist;
- (L) eine Länge des Agglomerats des Pulvers (10) gemäß einer Richtung parallel zu der Richtung einer Zugkraft (Ft) zwischen dem ersten Teil (20) und dem zweiten Teil (30) ist.

**2.** Verfahren zum Befestigen nach Anspruch 1, **dadurch gekennzeichnet, dass** der erste und der zweite Teil (20, 30) aus Aluminiumlegierung, deren mechanischer Widerstand im Bereich zwischen 150 und 400 Megapascal liegt, oder aus Stahl hergestellt sind, dessen mechanischer Widerstand im Bereich zwischen 600 und 2000 Megapascal liegt, und das Pulver aus Aluminium oder einer Aluminiumlegierung hergestellt ist, deren mechanischer Widerstand im Bereich zwischen 100 und 400 Megapascal liegt.

**3.** Verfahren zum Befestigen nach einem der vorhergehenden Ansprüche, **dadurch gekennzeichnet, dass** es, nach dem Sprühen, eine Beanspruchung der mechanischen Anordnung durch eine Scherkraft und/oder eine Zugkraft zwischen dem ersten Teil (20) und dem zweiten Teil (30) umfasst.

**4.** Verfahren zum Befestigen nach einem der vorhergehenden Ansprüche, **dadurch gekennzeichnet, dass** das Sprühen ein Kaltsprühen ist, das mit Luft bei einem Druck von 29 Bar plus oder minus 10 Prozent und bei einer Temperatur von 320 Grad Celsius plus oder minus 10 Prozent durchgeführt wird.

**5.** Verfahren zum Befestigen nach einem der vorhergehenden Ansprüche, **dadurch gekennzeichnet, dass** die Texturierung auf einer Oberfläche des ersten Teils (20) und auf einer Oberfläche des zweiten Teils (30) durchgeführt wird.

**6.** Verfahren zum Befestigen nach dem vorhergehenden Anspruch, **dadurch gekennzeichnet, dass** die Oberfläche des ersten Teils (20) und die Oberfläche des zweiten Teils (30) auf koplanare Weise angeordnet sind, wobei die zwei Teile (20, 30) Seite an Seite liegen.

**7.** Verfahren zum Befestigen nach einem der vorhergehenden Ansprüche, **dadurch gekennzeichnet, dass** die Teile (20, 30) mindestens teilweise aufeinander angeordnet sind, wobei das Sprühen einen der Teile (20, 30) gegenüber dem anderen der Teile (20, 30) blockiert.

**8.** Verfahren zum Befestigen nach einem der vorhergehenden Ansprüche, **dadurch gekennzeichnet, dass** die Texturierung durch einen Laserstrahl durchgeführt wird.

9. Verfahren zum Befestigen nach dem vorhergehenden Anspruch, **dadurch gekennzeichnet, dass** der Laserstrahl eine Aufeinanderfolge von mehreren Einwirkungen auf eine gleiche Stelle umfasst, gefolgt von einer Verschiebung, die ein Netz (R1, R2) von Löchern (21) bildet, die die mindestens einen Oberfläche texturieren, oder dadurch, dass der Laserstrahl eine kontinuierlichen Einwirkung während einer Verschiebung umfasst, der ein Netz von Linien (21) bildet, die die mindestens eine Oberfläche texturieren.

10. Verfahren zum Befestigen nach dem vorhergehenden Anspruch, **dadurch gekennzeichnet, dass** der erste und/oder der zweite Teil (20, 30) aus Aluminiumlegierung oder aus Stahl hergestellt sind, die Löcher oder die Linien (21) des Teils (20, 30) jeweils in einem Abstand voneinander von 150 Mikrometer oder von 200 Mikrometer plus oder minus 10 Prozent hergestellt sind.

11. Verfahren zum Befestigen nach einem der Ansprüche 9 oder 10, **dadurch gekennzeichnet, dass** die Herstellung des Netzes (R1, R2) jedem Loch (21) einen Umfang verleiht, der sich in einen Kreis mit einem Durchmesser (D) einordnet, der kleiner als oder gleich wie seine Tiefe (P) ist, oder jeder Linie (21) einen Umfang verleiht, der sich in ein Rechteck mit einer Breite (D) einordnet, die kleiner als oder gleich wie seine Tiefe (P) ist.

12. Anordnung, umfassend einen ersten Teil (20), einen zweiten Teil (30) und ein Agglomerat eines Pulvers aus einem duktilen Material, das die Teile (20, 30) aneinander befestigt, wobei die Anordnung **dadurch gekennzeichnet ist, dass** der mechanische Widerstand des duktilen Materials, kleiner als oder gleich demjenigen des ersten (20) und zweiten (30) Teils ist, und dadurch dass mindestens eine Oberfläche eines der zwei Teile (20, 30), auf der das Agglomerat befestigt ist, texturiert ist, und dadurch, dass die Texturierung ein Netz (R1, R2) von Löchern (21) umfasst, dessen Dichte (dpa) pro Flächeneinheit grösser ist als:

$$\frac{e}{Stpa \times L}$$

wobei:

- (e) eine Dichte des Agglomerats des Pulvers (10) gemäß einer senkrechten Richtung zu der Oberfläche des ersten Teils (20) oder des zweiten Teils (30) ist;
- (Stpa) der Schnitt der Löcher oder der Linien (21) des Netzes ist;
- (L) eine Länge des Agglomerats des Pulvers (10) gemäß einer Richtung parallel zu der Richtung einer Zugkraft (Ft) zwischen dem ersten Teil (20) und dem zweiten Teil (30) ist.

13. Boden- oder Luftfahrzeug, umfassend eine Anordnung nach Anspruch 12.

**Claims**

1. A method of attaching a first part (20) and a second part (30) of mechanical assembly to one another, the method comprising spraying a powder of a ductile material on said first part (20) and on said second part (30) causing, by agglomeration of this powder, the attachment the first part (20) and the second part (30) to one another, the method being **characterized in that** it comprises texturing at least one surface of the first part (20) or of the second part (30) on which the spraying is then carried out, **in that** the mechanical resistance of the ductile material from which the powder is formed is less than or equal to that of the first (20) and second (30) parts, and **in that** the texturing comprising manufacturing an array (R1, R2) of holes (21) via a series of several impacts in the same location by laser radiation followed by a movement of the laser radiation, said manufacturing of the array (R1, R2) is done based on the spraying of the powder so that the density (dpa) of the holes or lines (21) of the array (R1, R2) per surface unit is greater than:

$$\frac{e}{Stpa \times L}$$

with:

- (e) a thickness of the agglomeration of the powder (10) in a direction perpendicular to said surface of the first part (20) or the second part (30) ;
- (Stpa) the section of said holes or said lines of said array;
- (L) a length of the agglomeration of the powder (10) in a direction parallel to the direction of a traction force (Ft) between the first part (20) and the second part (30).

2. The attachment method according to claim 1, **characterized in that** the first and second parts (20, 30) are manufactured from aluminum alloy whose mechanical resistance is between 150 and 400 megapascals or from steel whose mechanical resistance is between 600 and 2000 megapascals and the powder is aluminum or an aluminum alloy whose mechanical resistance is between 100 and 400 megapascals.

3. The attachment method according to any one of the preceding claims, **characterized in that** it comprises, after spraying, stressing the mechanical assembly by a shearing and/or pulling force exerted between the first part (20) and the second part (30).

4. The attachment method according to any one of the preceding claims, **characterized in that** the spraying is a cold spraying, done with air at a pressure of 29 bars plus or minus 10 percent and at a temperature of 320 degrees Celsius plus or minus 10 percent.

5. The attachment method according to any one of the preceding claims, **characterized in that** the texturing is done on a surface of the first part (20) and on a surface of the second part (30).

6. The attachment method according to the preceding claim, **characterized in that** said surface of the first part (20) and said surface of the second part (30) are arranged in a coplanar manner, the two parts (20, 30) being next to one another.

7. The attachment method according to any one of the preceding claims, **characterized in that** the parts (20, 30) are arranged at least partially on top of one another, the spraying immobilizing one of the parts (20, 30) against the other of the parts (20, 30) .

8. The attachment method according to any one of the preceding claims, **characterized in that** the texturing is done by laser radiation.

9. The attachment method according to the preceding claim, **characterized in that** the laser radiation comprises a series of several impacts in the same location followed by a movement forming an array (R1, R2) of holes (21) texturing said at least one surface or **in that** the laser radiation comprises a continuous impact during a movement forming an array of lines (21) texturing said at least one surface.

10. The attachment method according to the preceding claim, **characterized in that**, the first and/or the second part (20, 30) being manufacturing from an aluminum or steel alloy, the holes or the lines (21) of said part (20, 30) are respectively made at a distance from one another of 150 micrometers or of 200 micrometers, plus or minus 10 percent.

11. The attachment method according to any one of claims 9 or 10, **characterized in that** the manufacture of the array (R1, R2) confers upon each hole (21) a contour fitted into a circle of diameter (D) smaller than or equal to its depth (P) or confers upon each line (21) a contour fitted into a rectangle of width (D) smaller than or equal to its depth (P).

12. An assembly comprising a first part (20), a second part (30) and an agglomeration of a powder of a ductile material attaching the parts (20, 30) to one another, the assembly being **characterized in that** the mechanical resistance of said ductile material is less than or equal to that of the first (20) and second (30) parts, **in that** at least one surface of one of the two parts (20, 30) on which the agglomeration is attached is textured, and **in that** the texturing comprises an array (R1, R2) of holes (21) whereof the density (dpa) per surface unit is greater than

$$\frac{e}{Stpa \times L}$$

with:

- (e) a thickness of the agglomeration of the powder (10) in a direction perpendicular to said surface of the first part (20) or the second part (30) ;
- (Stpa) the section of said holes or said lines (21) of said array;
- (L) a length of the agglomeration of the powder (10) in a direction parallel to the direction of a traction force (Ft) between the first part (20) and the second part (30).

13. A land or air vehicle comprising an assembly according to claim 12.

_Fig.1_

_Fig.2A_

*Fig.2B*

*Fig.3*

*Fig.4A*

*Fig.4B*

**Fig.5**

**Fig.6**

_Fig.7_

_Fig.8_

## Fig.9

10

20,30

## Fig.10

10

20,30

EP 3 990 210 B1

_Fig.11_

_Fig.12_

24

*Fig.13A*

*Fig.13B*

## Fig.14A

## Fig.14B

## *Fig.14C*

## *Fig.14D*

## *Fig.14E*

## *Fig.14F*

# *Fig.15A*

# *Fig.15B*

## *Fig.15C*

## *Fig.15D*

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20070194085 A1

- US 7624910 B2